# EUROPÄISCHE PATENTANMELDUNG

(11) **EP 1 901 570 A1**
(43) Veröffentlichungstag der Anmeldung: **19.03.2008**
(21) Anmeldenummer: 06450130.7
(22) Anmeldetag: 14.09.2006
(51) Int. Cl.: H04Q 7/38

(54) **Verfahren zum Lokalisieren einer Mobilstation in einem Telekommunikationsnetz**

(71) Anmelder: Ftw. Forschungszentrum Telekommunkation Wien Betriebs-GmbH, 1220 Wien (AT)
(72) Erfinder: Bessler, Sandford, Dipl.-Ing. Dr., 1010 Wien (AT); Pailer, Rudolf, Dipl.-Ing, 1080 Wien (AT)
(74) Vertreter: Weiser, Andreas

(57) **Zusammenfassung**

Verfahren zum Lokalisieren einer Mobilstation (2) in einem Telekommunikationsnetz (1) für mehrere Benutzer (4), mit den Schritten:
Speichern einer Liste (6) von für einen bestimmten Benutzer (4) zur Abfrage gestatteten Aufenthaltsgebieten (3) der Mobilstation (2) in einem der Mobilstation (2) zugeordneten Server (5),
Ermitteln der aktuellen Position der Mobilstation (2) im Telekommunikationsnetz (1) auf an sich bekannte Art und Zuordnen der ermittelten Position zu zumindest einem aktuellen Aufenthaltsgebiet (3), und
Anzeigen des aktuellen Aufenthaltsgebiets (3) an einen abfragenden Benutzer (4) durch den Server (5), wenn das aktuelle Aufenthaltsgebiet (3) in der gespeicherten Liste (6) der zur Abfrage gestatteten Aufenthaltsgebiete (3) dieses Benutzers (4) enthalten ist.

## Beschreibung

Die vorliegende Erfindung betrifft ein Verfahren zum Lokalisieren einer Mobilstation in einem Telekommunikationsnetz für mehrere Benutzer.

Herkömmliche Lokalisierungsverfahren liefern als Antwort auf eine Lokalisierungsanfrage stets die gleichen Positionsdaten, z.B. geographische Koordinaten. Damit kann im Einzelfall die Privatsphäre des Benutzers der Mobilstation empfindlich gestört sein, was eine breite Akzeptanz solcher Verfahren verhindert und die Zahl möglicher Anwendungsgebiete beschränkt.

Es besteht daher ein Bedarf nach einem einfachen Verfahren zum Lokalisieren einer Mobilstation, welches ausreichenden Schutz der Privatsphäre ermöglicht, um breite Akzeptanz für zahlreiche, auch neue Anwendungsgebiete zu schaffen.

Dieses Ziel wird gemäß der Erfindung mit einem Verfahren erreicht, das sich auszeichnet durch die Schritte:

Speichern einer Liste von für einen bestimmten Benutzer zur Abfrage gestatteten Aufenthaltsgebieten der Mobilstation in einem der Mobilstation zugeordneten Server,

Ermitteln der aktuellen Position der Mobilstation im Telekommunikationsnetz auf an sich bekannte Art und Zuordnen der ermittelten Position zu zumindest einem aktuellen Aufenthaltsgebiet, und

Anzeigen des aktuellen Aufenthaltsgebiets an einen abfragenden Benutzer durch den Server, wenn das aktuelle Aufenthaltsgebiet in der gespeicherten Liste der zur Abfrage gestatteten Aufenthaltsgebiete dieses Benutzers enthalten ist.

Die Erfindung beruht auf einem völlig neuartigen Ansatz, und zwar der Diskretisierung des Ortsraumes in "unscharfe" Aufenthaltsgebiete, wobei der Grad der Lokalisierungsgenauigkeit durch die Größe der zur Abfrage gestatteten Aufenthaltsgebiete vom Mobilstationsbenutzer für jeden abfragenden Benutzer individuell festgelegt werden kann: Vertrauten Personen, wie Familienangehörigen und Freunden, können viele und kleine Aufenthaltsgebiete zur Abfrage gestattet werden, entfernter bekannten Personen oder Fremden weniger und größere Aufenthaltsgebiete. Der Schutz der Privatsphäre des lokalisierten Mobilstationsbenutzers liegt damit einerseits in der vollständigen Disposition über die Aufenthaltsgebiete, die er anderen gestattet abzufragen, anderseits in der Unschärfe der Positionsbestimmung selbst, die mit einer solchen gebietsweisen Abfrage einhergeht. Die Erfindung löst damit auf verblüffend einfache Art und Weise die Datenschutzproblematik der bekannten Lokalisierungsverfahren.

Eine bevorzugte Ausführungsform des Verfahrens der Erfindung zeichnet sich dadurch aus, daß das genannte Anzeigen das Empfangen eines der zur Abfrage gestatteten Aufenthaltsgebiete im Server und das Zurücksenden einer Ja/Nein-Antwort umfaßt. Dadurch kann der Datenschutz noch weiter erhöht werden, da der abfragende Benutzer für diese Variante bereits Kenntnis über die möglichen zur Abfrage gestatteten Aufenthaltsgebiete haben muß.

Alternativ oder zusätzlich kann bevorzugt vorgesehen werden, daß der Server auf Anforderung einem Benutzer zunächst die Liste der ihm zur Abfrage gestatteten Aufenthaltsgebiete einer Mobilstation anzeigt. Im Austausch für etwas geringeren Datenschutz kann so das Verfahren vereinfacht und größeren Benutzerkreisen zugänglich gemacht werden.

Besonders vorteilhaft ist es, wenn gemäß einem weiteren Merkmal der Erfindung das genannte Ermitteln und Zuordnen unter Zuhilfenahme eines Protokollierens des Betretens und Verlassens der Aufenthaltsgebiete erfolgt. Dadurch kann für den Fall Vorsorge getroffen werden, daß der aktuelle Aufenthalt einer Mobilstation in einem Aufenthaltsgebiet nicht feststellbar ist, beispielsweise innerhalb eines Gebäudes im Falle einer Satellitenortung, in welchem Fall z.B. aus dem Betreten oder Verlassen eines umliegenden Aufenthaltsgebietes Rückschlüsse über den Aufenthalt im innenliegenden Aufenthaltsgebiet gezogen werden können.

Falls gewünscht, kann bevorzugt auch vorgesehen werden, daß der Zeitpunkt des Betretens und/oder Verlassens eines Aufenthaltsgebietes dem zur Abfrage berechtigten Benutzer angezeigt wird.

Eine weitere bevorzugte Variante des erfindungsgemäßen Verfahrens besteht darin, daß der Benutzer benachrichtigt wird, wenn eine Mobilstation ein ihm zur Abfrage gestattetes Aufenthaltsgebiet betritt und/oder verläßt. Beispielsweise kann sich ein Benutzer - soferne ihm dies gestattet wird - hinsichtlich einer bestimmten Mobilstation beim Server registrieren ("subscribe") und erhält auf diese Weise Benachrichtigungen über die Bewegungen der Mobilstation im Rahmen seiner zur Abfrage gestatteten Aufenthaltsgebiete.

Die aktuelle Position der Mobilstation im Telekommunikationsnetz kann auf jede in der Technik bekannte Art bestimmt werden. Besonders bevorzugt wird die Position von der Mobilstation selbst durch Satellitenortung ermittelt; oder vom Telekommunikationsnetz durch Funkortung. Im ersten Fall kann die Mobilstation weitgehend autark arbeiten, im zweiten Fall ist der Hardwareaufwand in der Mobilstation geringer.

In jedem Fall ist es besonders günstig, wenn gemäß einem weiteren bevorzugten Merkmal der Erfindung der Server in der Mobilstation enthalten ist und das genannte Zuordnen zum Aufenthaltsgebiet in der Mobilstation erfolgt. Dies ermöglicht eine Implementierung des Verfahrens ohne zusätzliche zentrale Einrichtungen. Alternativ kann bevorzugt vorgesehen werden, daß der Server von der Mobilstation entfernt angeordnet ist, die Position der Mobilstation über das Telekommunikationsnetz an den Server gesendet wird, und das genannte Zuordnen zum Aufenthaltsgebiet im Server erfolgt. Diese Variante erfordert nur geringe Rechenleistung in der Mobilstation.

Die Erfindung wird nachstehend anhand eines in den beigeschlossenen Zeichnungen dargestellten Ausführungsbeispieles näher erläutert. In den Zeichnungen zeigt
Fig. 1 die zur Durchführung des Verfahrens der Erfindung erforderlichen Komponenten in Verbindung mit einem beispielhaften geographischen Szenario von zur Abfrage gestatteten Aufenthaltsgebieten; und
Fig. 2 den Aufbau der gespeicherten Liste von zur Abfrage gestatteten Aufenthaltsgebieten im Server.

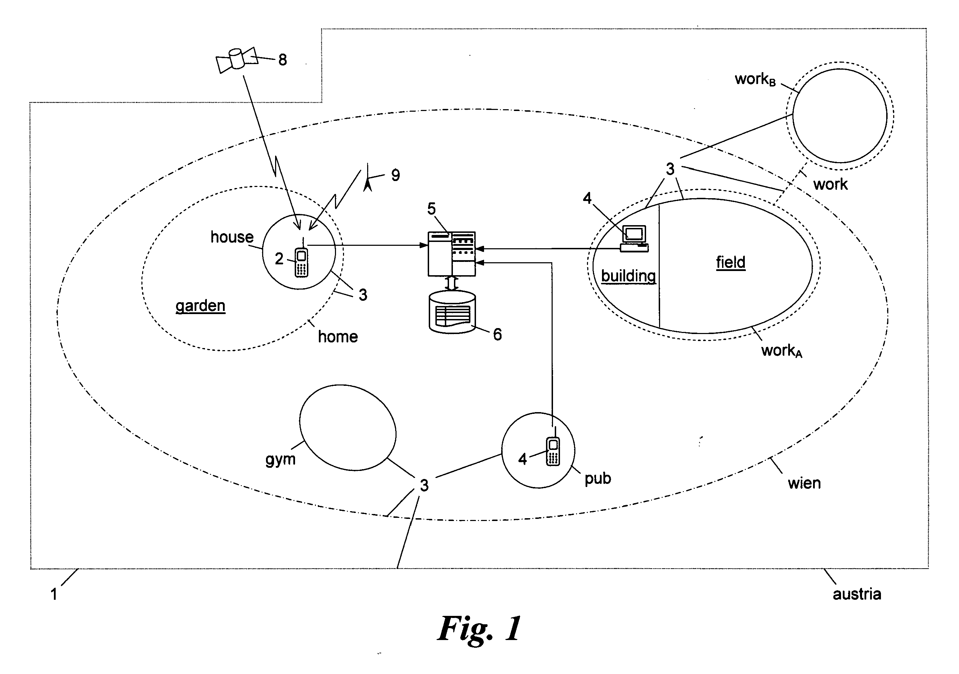

Fig. 1 zeigt ein Telekommunikationsnetz 1, das sich beispielsweise aus einem oder mehreren Mobilfunk- oder Mobiltelefonnetzen zusammensetzt und einen geographischen Bereich "austria" abdeckt.

Im Telekommunikationsnetz 1 bewegt sich - stellvertretend für viele Mobilstationen - eine Mobilstation 2. Die Mobilstation 2 befindet sich gerade in einem (bzw. mehreren, wenn sich diese überlappen) Aufenthaltsgebieten 3, und zwar im gezeigten Beispiel im Aufenthaltsgebiet "house", das vom Aufenthaltsgebiet "garden" umgeben ist, welches wiederum Teil der größeren Aufenthaltsgebiete "wien" und "austria" ist.

Weitere potentielle Aufenthaltsgebiete 3, in denen sich die Mobilstation 2 befinden kann, sind die Aufenthaltsgebiete "gym", "pub" und "work". Wie gezeigt kann sich ein Aufenthaltsgebiet wie das Gebiet "work" auch aus mehreren verteilten Gebieten "work_{A}" und "work_{B}" zusammensetzen; das Aufenthaltsgebiet "work_{A}" ist hier wiederum in die Gebiete "building" und "field" unterteilt.

Die Form der Aufenthaltsgebiete 3 ist beliebig und kann entsprechend den Anforderungen gewählt werden, z.B. kreisförmig, rechteckig, polygonal, unregelmäßig usw.

Zwei stellvertretend dargestellte Benutzer 4, welche die Mobilstation 2 lokalisieren möchten, befinden sich gerade in den Aufenthaltsgebieten "pub" und "building" (obwohl sie selbstverständlich auch außerhalb der Aufenthaltsgebiete 3 sein können) und verfügen jeweils über ein Endgerät, mit dem sie mit einem Server 5 kommunizieren können. Das Endgerät kann beliebiger Art sein, beispielsweise ein Mobiltelefon, PC, PDA, Telefon, usw. Die Kommunikation der Benutzer 4 mit dem Server 5 kann auf beliebige Art erfolgen, beispielsweise über Internet, Funk-, Telefon- oder Mobiltelefonkanäle.

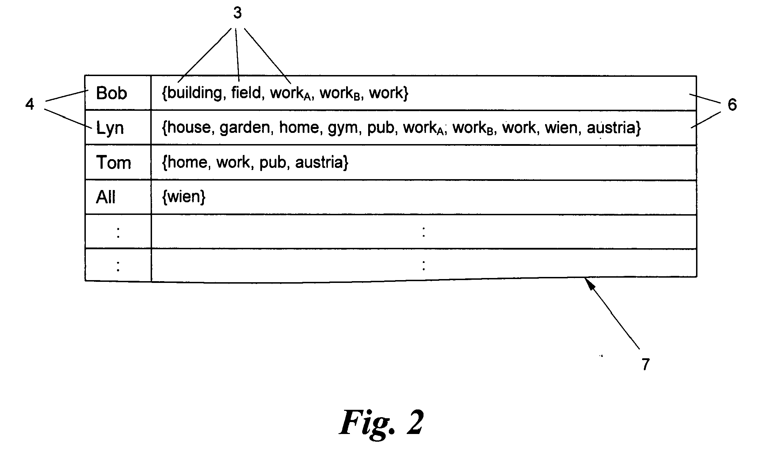

Der Server 5 kann eine von der Mobilstation 2 gesonderte und allen zu lokalisierenden Mobilstationen 2 gemeinsame, zentrale Einheit sein, oder alternativ direkt in der Mobilstation 2 selbst enthalten sein, beispielsweise als Softwareapplikation, die auf der Hardware der Mobilstation 2 läuft, in welchem Fall jede Mobilstation 2 über einen eigenen Server 5 verfügt. Der Server 5 enthält bzw. verwaltet Listen 6, deren Funktion und Aufbau anhand von Fig. 2 nun ausführlicher erläutert wird.

Eine in Fig. 2 gezeigte Gruppe 7 von Listen 6 ist jeweils einer zu lokalisierenden Mobilstation 2 zugeordnet; weiteren Mobilstationen 2 sind jeweils weitere Gruppen 7 zugeordnet. Der Benutzer der Mobilstation 2 speichert im Server 5 - u.zw. entweder mit Hilfe seiner Mobilstation 2 über das Telekommunikationsnetz 1 oder mit Hilfe eines beliebigen Endgerätes über eine beliebige Datenverbindung oder, falls der Server 5 selbst Teil der Mobilstation 2 ist, direkt in seiner Mobilstation 2 - für jeden Benutzer 4 eine Liste 6 mit all jenen Aufenthaltsgebieten 3, deren Abfrage er dem Benutzer 4 gestatten möchte. In Fig. 2 sind vier Beispiele angeführt:
- Benutzer "Bob" ist Arbeitskollege und darf die Aufenthaltsgebiete "building", "field", "work_{A}", "work_{B}" und "work" abfragen;
- Benutzerin "Lyn" ist Familienmitglied und hat die Berechtigung zur Abfrage der Aufenthaltsgebiete "house", "garden", "home", "gym", "pub" "work_{A}", "work_{B}", "work" "wien" und "austria";
- Benutzer "Tom" ist ein Freund; ihm werden die Aufenthaltsgebiete "home", "work", "pub" und "austria" zur Abfrage gestattet;
- auch Gruppen von Benutzern können definiert werden; beispielsweise wird eine Benutzergruppe "All" z.B. für alle eingetragenen Benutzer 4 definiert, die das Aufenthaltsgebiet "wien" abfragen kann.

In der vorliegenden Beschreibung werden Benutzergruppen als vom Begriff "Benutzer" mitumfaßt angesehen.

Nach dem Einspeichern der Listen 6 im Server 5 ist der weitere Ablauf des Verfahrens wie folgt. Die Mobilstation 2 ermittelt periodisch oder auf Anfrage ihre aktuelle geographische Position im Telekommunikationsnetz 1 und sendet diese an den Server 5. Für die Ermittlung der Position kann jedes in der Technik bekannte Verfahren verwendet werden. Beispielsweise kann die Mobilstation 2 ihre Position durch Funksignale von Satelliten 8 ermitteln, z.B. aus dem GPS-, GALILEO-, GLONASS-, EGNOS-, WAAS-System od.dgl. Alternativ oder zusätzlich kann die Mobilstation 2 ihre Position aus Funksignalen von Basisstationen 9 des Telekommunikationsnetzes 1 ermitteln, oder die Basisstationen 9 ermitteln im Zusammenspiel mit weiteren Komponenten des Telekommunikationsnetzes 1 die aktuelle Position der Mobilstation 2 und senden diese ihrerseits an den Server 5, wie in der Technik bekannt.

Im Server 5 wird die empfangene Position der Mobilstation 2 einem oder mehreren Aufenthaltsgebieten 4 zugeordnet, d.h. je nachdem, in welches bzw. in welche Aufenthaltsgebiet(e) 4 die Position gerade fällt. Falls der Server 5 eine von der Mobilstation 2 entfernte Einheit ist, könnte die Zuordnung auch in der Mobilstation 2 durchgeführt und nur das ermittelte aktuelle Aufenthaltsgebiet 3 an den Server 5 gesendet werden.

Sobald ein Benutzer 4 eine Lokalisierungsabfrage bezüglich einer Mobilstation 2 an den Server 5 sendet, ermittelt dieser in der Gruppe 7 von Listen 6 der Mobilstation 2 die dem Benutzer 4 zugehörige Liste 6 und zeigt nur dann das aktuelle Aufenthaltsgebiet der Mobilstation 2 dem Benutzer 4 an, wenn es in der gespeicherten Liste 6 des Benutzers 4 enthalten ist.

Bei der Abfrage kann der Benutzer 4 explizit ein abzufragendes Aufenthaltsgebiet 3 angeben, beispielsweise "gym"?, und der Server 5 schlichtweg mit "Ja" antwortet, wenn sich die Mobilstation 2 im Aufenthaltsgebiet "gym" befindet, oder mit "Nein", wenn nicht. Alternativ gibt der Benutzer 4 bei einer Lokalisierungsanfrage kein Aufenthaltsgebiet 3 explizit an und der Server 5 überprüft, ob das aktuelle Aufenthaltsgebiet 3 der Mobilstation 2 in der Liste 6 des abfragenden Benutzers 4 enthalten ist; wenn ja, wird es dem Benutzer 4 angezeigt.

Weitere Abfragevarianten sind möglich. Beispielsweise kann der Server 5 auf Anforderung eines Benutzers 4 diesem die aktuelle Liste 6 der ihm zur Abfrage gestatteten Aufenthaltsgebiete 3 anzeigen, und der Benutzer 4 kann anschließend eine Abfrage bezüglich eines konkreten Aufenthaltsgebietes 3 durchführen. Alternativ zeigt der Server 5 einem Benutzer 4 zu allen ihm gestatteten Aufenthaltsgebieten 3 an, ob sich die Mobilstation 2 gerade darin aufhält oder nicht.

Auch ist es möglich, daß sich ein Benutzer 4 am Server 5 registriert ("subscribe") und jedesmal dann, wenn die Mobilstation 2 in ein zur Abfrage gestattetes Aufenthaltsgebiet 3 eintritt oder dieses verläßt, vom Server 5 benachrichtigt wird ("notify").

Allgemein ist es möglich, daß der Server 5 protokolliert, zu welchen Zeitpunkten eine Mobilstation 2 ein Aufenthaltsgebiet 3 betreten oder verlassen hat, und dies einem abfragenden Benutzer entsprechend anzeigt.

Optional können auf Basis von Zeitprotokollen über das Betreten und/oder Verlassen eines Aufenthaltgebietes 3 Rückschlüsse auf das aktuelle Aufenthaltsgebiet gezogen werden, beispielsweise, wenn die Position der Mobilstation 2 im aktuellen Aufenthaltsgebiet 3 nicht feststellbar ist, z.B. in einem Gebäude im Falle einer Satellitenortung. Beispielsweise läßt ein Verlassen des Aufenthaltsgebietes "garden" ohne gleichzeitiges Betreten des Aufenthaltsgebietes "wien" darauf schließen, daß das Aufenthaltsgebiet "house" betreten wurde, usw.

Darüber hinaus ist es möglich, einem zur Abfrage berechtigten Benutzer 4 auch die Zeitpunkte des Betretens und/oder Verlassens eines Aufenthaltsgebietes 3 anzuzeigen, wenn dies gewünscht ist.

Die Anzahl und Größe der einem Benutzer 4 zur Abfrage gestatteten Aufenthaltsgebiete 3 werden entsprechend dem Grad des Vertrauens festgelegt, das der Benutzer der Mobilstation 2 dem Benutzer 4 entgegenbringt: Je mehr Vertrauen vorliegt, desto mehr und kleinere Aufenthaltsgebiete 3 werden in der Liste 6 enthalten sein, was eine umso präzisere Lokalisierung ermöglicht; je weniger Vertrauen vorliegt, desto weniger und größere Aufenthaltsgebiete 3 werden in der Liste 6 gespeichert, was nur eine grobe Lokalisierung erlaubt. Auch die Art der einem Benutzer gestatteten Abfrage, wie "bloße" Lokalisierungsabfrage; Abruf der Liste der zur Abfrage gestatteten Aufenthaltsgebiete; Abfrage der Zeitpunkte des Betretens oder Verlassens von Aufenthaltsgebieten; "subscribe/notify"-Benachrichtigungen usw., werden entsprechend dem Vertrauensgrad festgelegt.

Das Definieren der Aufenthaltsgebiete 3 und das Einspeichern der Listen 6 im Server 5 kann vom Benutzer der Mobilstation 2 auch an ihm vertrauenswürdige Dritte delegiert werden, u.zw. sowohl an Personen als auch Applikationen. Dies ist insbesondere im Falle rasch wechselnder, stets neuer Aufenthaltsgebiete 3 günstig, z.B. bei Mitarbeitern im Außendienst, auf Hausbesuch, auf Montage usw. Hier kann z.B. der Dienstgeber, Dispatcher usw. dem Benutzer der Mobilstation 2 z.B. tagesaktuelle Listen abfragbarer Aufenthaltsgebiete 3 zur Verfügung stellen oder - soferne gestattet - im Server 5 einspeichern.

Die Erfindung ist nicht auf die dargestellten Ausführungsbeispiele beschränkt, sondern umfaßt alle Varianten und Modifikationen, die in den Rahmen der angeschlossenen Ansprüche fallen.

## Patentansprüche

1. Verfahren zum Lokalisieren einer Mobilstation in einem Telekommunikationsnetz für mehrere Benutzer, **gekennzeichnet durch** die Schritte:
Speichern einer Liste (6) von für einen bestimmten Benutzer (4) zur Abfrage gestatteten Aufenthaltsgebieten (3) der Mobilstation (2) in einem der Mobilstation (2) zugeordneten Server (5),
Ermitteln der aktuellen Position der Mobilstation (2) im Telekommunikationsnetz (1) auf an sich bekannte Art und Zuordnen der ermittelten Position zu zumindest einem aktuellen Aufenthaltsgebiet (3), und
Anzeigen des aktuellen Aufenthaltsgebiets (3) an einen abfragenden Benutzer (4) **durch** den Server (5), wenn das aktuelle Aufenthaltsgebiet (3) in der gespeicherten Liste (6) der zur Abfrage gestatteten Aufenthaltsgebiete (3) dieses Benutzers (4) enthalten ist.

2. Verfahren nach Anspruch 1, **dadurch gekennzeichnet, daß** das genannte Anzeigen das Empfangen eines der zur Abfrage gestatteten Aufenthaltsgebiete (3) im Server (5) und das Zurücksenden einer Ja/Nein-Antwort umfaßt.

3. Verfahren nach Anspruch 1 oder 2, **dadurch gekennzeichnet, daß** der Server (5) auf Anforderung einem Benutzer (4) die Liste (6) der ihm zur Abfrage gestatteten Aufenthaltsgebiete (3) einer Mobilstation (2) anzeigt.

4. Verfahren nach einem der Ansprüche 1 bis 3, **dadurch gekennzeichnet, daß** das genannte Ermitteln und Zuordnen unter Zuhilfenahme eines Protokollierens des Betretens und Verlassens der Aufenthaltsgebiete (3) erfolgt.

5. Verfahren nach einem der Ansprüche 1 bis 4, **dadurch gekennzeichnet, daß** der Zeitpunkt des Betretens und/oder Verlassens eines Aufenthaltsgebietes (3) dem zur Abfrage berechtigten Benutzer (4) angezeigt wird.

6. Verfahren nach einem der Ansprüche 1 bis 5, **dadurch gekennzeichnet, daß** der Benutzer (4) benachrichtigt wird, wenn eine Mobilstation (2) ein ihm zur Abfrage gestattetes Aufenthaltsgebiet (3) betritt und/oder verläßt.

7. Verfahren nach einem der Ansprüche 1 bis 6, **dadurch gekennzeichnet, daß** die Position der Mobilstation (2) von dieser durch Satellitenortung (8) ermittelt wird.

8. Verfahren nach einem der Ansprüche 1 bis 6, **dadurch gekennzeichnet, daß** die Position der Mobilstation (2) vom Telekommunikationsnetz (1) durch Funkortung (9) ermittelt wird.

9. Verfahren nach einem der Ansprüche 1 bis 8, **dadurch gekennzeichnet, daß** Server (5) in der Mobilstation (2) enthalten ist und das genannte Zuordnen zum Aufenthaltsgebiet (3) in der Mobilstation (2) erfolgt.

10. Verfahren nach einem der Ansprüche 1 bis 8, **dadurch gekennzeichnet, daß** der Server (5) von der Mobilstation (2) entfernt angeordnet ist, die Position der Mobilstation (2) über das Telekommunikationsnetz (1) an den Server (5) gesendet wird, und das genannte Zuordnen zum Aufenthaltsgebiet (3) im Server (5) erfolgt.
